# EUROPEAN PATENT APPLICATION

(11) **EP 1 695 798 A1**
(43) Date of publication of application: **30.08.2006**
(21) Application number: 06100460.2
(22) Date of filing: 17.01.2006
(51) Int. Cl.: B25D 17/04, F16F 15/023

(54) **Handle Assembly for Hammer Apparatus**

(30) Priority: 24.02.2005 GB 0503781
(71) Applicant: Black & Decker, Inc., Newark, DE 19711 (US)
(72) Inventor: Becht, Reimund, D-65597, Hühnfelden 1 (DE)
(74) Representative: Bell, Ian Stephen

(57) **Abstract**

A handle assembly 6 for a reciprocating hammer tool comprises a handle 8 for gripping by a user, a guide rod 10 fixed to the hammer housing 4 and an elongate aperture 12 which slidably engages guide rod 10 to ensure that the handle assembly 6 is aligned with the reciprocating hammer 2 at all times. The handle assembly 6 also comprises an air filled chamber 14 bounded by a rubber membrane 16 and disposed in a recess 18 in the hammer housing 4. Air filled chamber 14 is adapted to damp vibration during use of the reciprocating hammer. An engaging member 20 formed integrally with handle 8 is disposed adjacent rubber membrane 16. Engaging member 20 can move through distance S from a position in which the engaging member 20 is inserted into recess 18 to its greatest extent and fully compresses air chamber 14, to a position in which the handle 8 is pulled upwardly such that engaging member 20 and elongate aperture 12 move through distance S until guide rod 10 abuts the bottom edge 12b of the elongate aperture 12. In this position, air chamber 14 is placed under minimum compression by engaging member 20.

## Description

The present invention relates to a handle assembly for a hammer apparatus and relates particularly, but not exclusively, to a handle assembly for a powered reciprocating hammer having a damping means to reduce the transmission of vibration to a user, and more particularly to a pavement breaker.

Powered reciprocating hammers are known which have an electric motor that drives a hollow piston. A beat piece is disposed in the hollow piston and is caused to oscillate under an air spring effect such that the beat piece strikes an end of a bit to cause a hammering action.

Reciprocating hammers of this type generally cause a large amount of vibration, which can be transmitted to a user and can be detrimental to the health of a user.

Preferred embodiments of the present invention seek to provide a handle assembly for a hammer in which the amount of vibration transmitted to a user of an apparatus incorporating the handle assembly is reduced.

According to an aspect of the present invention, there is provided a handle assembly for a hammer apparatus having a housing, a motor and an output shaft for actuating a working member of the hammer apparatus, the handle assembly comprising:-
a handle for gripping by a user; and
damping means connected to the handle for damping transmission of vibrations from the working member to the handle, wherein the damping means comprises at least one fluid filled cushion.

This provides the advantage that vibration caused by hammer action of the hammer apparatus transmitted to a user is reduced, which in turn reduces the ill effects on the health of the user associated with exposure to excessive vibration.

In a preferred embodiment, at least one said fluid filled cushion is at least partially disposed in a respective recess in the hammer housing in use, and the handle assembly further comprises at least one engaging member disposed at the end of said assembly remote from the handle and adapted to be at least partially received in a respective said recess to engage at least one said fluid filled cushion, wherein at least one said engaging member is moveable relative to the corresponding said recess.

This provides the advantage that a user can vary the force applied to the working member of the hammer apparatus, whilst still being protected from exposure to excessive vibration.

At least one said engaging member may comprise sides disposed substantially parallel to a longitudinal axis of said hammer apparatus in use.

At least one said engaging member may comprise sides diverging from said longitudinal axis in a direction towards an end of the handle assembly remote from the handle.

At least one said engaging member may comprise sides converging towards said longitudinal axis in a direction towards an end of the handle assembly remote from the handle.

At least one said engaging member may comprise a groove formed in a respective outer surface thereof.

In a preferred embodiment, the assembly further comprises at least one protrusion and/or elongate aperture adapted to slidably receive a respective elongate aperture and/or protrusion to retain the handle assembly in contact with said cushion.

In a preferred embodiment, at least one said cushion is formed from at least one elastomeric material.

At least one said elastomeric material may be rubber.

According to another aspect of the present invention, there is provided a hammer apparatus including a handle assembly as defined above.

Preferred embodiments of the present invention will now be described, by way of example only and not in any limitative sense, with reference to the accompanying drawings in which: -
Figure 1a is a cross sectional view of a first embodiment of a handle assembly disposed on a reciprocating hammer;
Figure 1b is a graph of the force transmitted to a hammer bit of the reciprocating hammer of Figure 1a in response to the force applied by a user, versus distance of penetration of a handle member into the hammer body;
Figure 2a is a cross sectional view of a second embodiment of a handle assembly disposed on a reciprocating hammer;
Figure 2b is a graph, corresponding to Figure 1b, of force transmitted to a hammer bit of the reciprocating hammer of Figure 2a in response to the force applied by a user, versus distance of penetration of a handle member into the hammer body;
Figure 3a is a cross sectional view of a third embodiment of a handle assembly disposed on a reciprocating hammer;
Figure 3b is a graph, corresponding to Figure 1b, of force transmitted to a hammer bit of the reciprocating hammer of Figure 3a in response to the force applied by a user, versus distance of penetration of a handle member into the hammer body;
Figure 4a is a cross sectional view of a fourth embodiment of a handle assembly disposed on a reciprocating hammer; and
Figure 4b is a graph, corresponding to Figure 1b, of force transmitted to a hammer bit of the reciprocating hammer of Figure 4a in response to the force applied by a user, versus distance of penetration of a handle member into the hammer body.

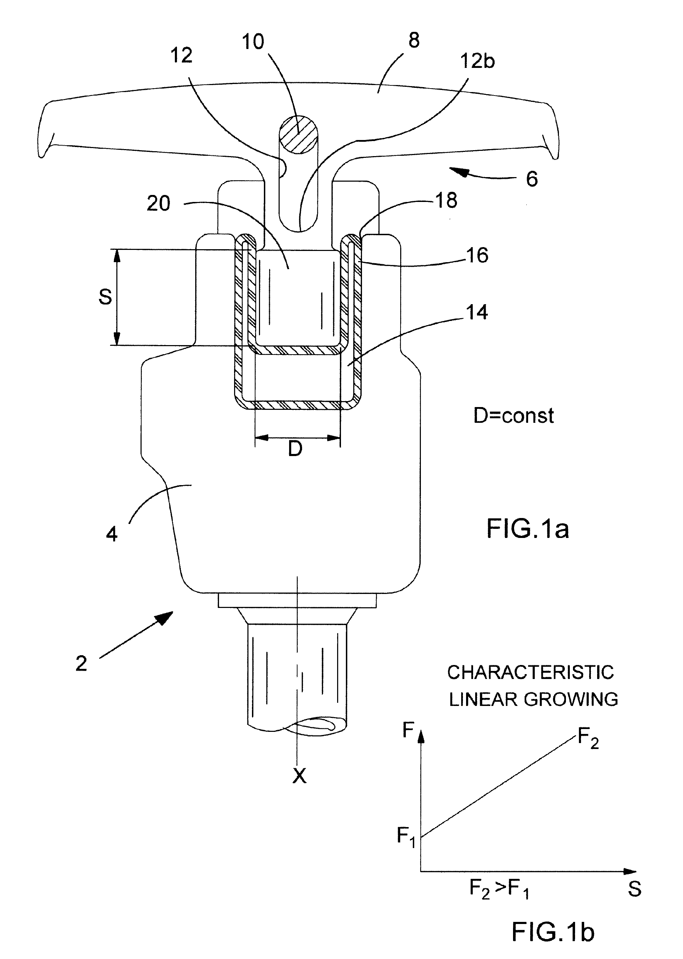

Referring to Figure 1, a reciprocating hammer shown generally by 2 comprises a housing 4 in which a motor (not shown) is disposed. The motor may be electric or pneumatic, or may be powered by an internal combustion engine. The motor drives a transmission means (not shown), which causes a hammer bit (not shown) to reciprocate. The mechanism for causing reciprocation of a hammer bit will be well known to persons skilled in the art and will therefore not be discussed herein in any more detail.

A handle assembly 6 comprises a handle 8 for gripping by a user, a guide rod 10 fixed to the hammer housing 4 and an elongate aperture 12 which slidably engages guide rod 10 to ensure that the handle assembly 6 is aligned with the reciprocating hammer 2 at all times. The handle assembly 6 also comprises an air filled chamber 14 bounded by a rubber membrane 16 and disposed in a recess 18 in the hammer housing 4. Rubber membrane 16 may be filled with fluids other than air, to change the damping characteristics of the handle assembly 6.

An engaging member 20 formed integrally with handle 8 is disposed adjacent rubber membrane 16. Engaging member 20 can move through distance S from the position shown in Figure 1a, in which the engaging member 20 is inserted into recess 18 to its greatest extent and fully compresses air chamber 14, to a position in which the handle 8 is pulled upwardly such that engaging member 20 and elongate aperture 12 move through distance S until guide rod 10 abuts the bottom edge 12b of the elongate aperture 12. In this position, air chamber 14 is placed under minimum compression by engaging member 20.

The movement of the handle assembly 6 through distance S varies the compression of the air chamber 14, and allows a user to control the amount of force transmitted to the hammer housing 4 in response to the user pushing against handle 8.

Referring to Figure 1b, it can be seen that when S is small i.e. when engaging member 20 is almost completely removed from recess 18 placing the air chamber 14 at minimum compression, the force F1 transmitted to the hammer housing 4 from the user is small. As the user increases the force at which they push down on handle 8, engaging member 20 moves into recess 18 and compresses air chamber 14. This results in a generally linear increase in the force transmitted to the hammer housing 4 as shown by the line on graph Figure 1b, until engaging member 20 has moved to its greatest extent into recess 18 as shown in Figure 1a at which the air chamber 14 is at maximum compression and the force transmitted to the hammer housing 4 is F₂.

Consequently, damping of vibrations caused by the hammer bit (not shown) is provided over a range of forces applied by a user, allowing the user to control the force at which the reciprocating hammer 2 acts on a workpiece whilst still being protected from excessive vibration.

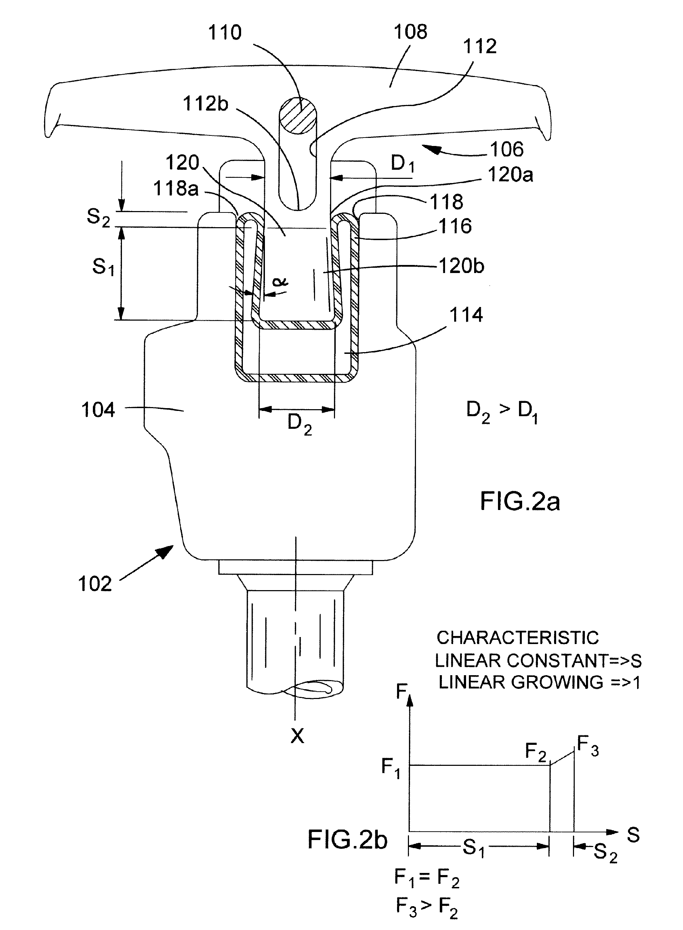

It has been found that changing the profile of engaging portion 20 changes the characteristic of force transmitted to the hammer housing versus distance of penetration of the engaging handle (and thus amount of compression of air chamber 14). A second embodiment of a handle assembly 4 for the reciprocating hammer is shown in Figure 2a. Parts common to the embodiment of Figure 1 are shown with like reference numerals but increased by 100.

In this embodiment, the engaging member 120 of the handle assembly 106 is partially conical in shape. The diameter of the engaging member 120 increases from D₁ at the upper most part of the engaging member 120 to a distance D₂ at the lowermost part of the engaging member 120. This changes the characteristic (Figure 2b) of force transmitted to the housing versus the extent to which the engaging member 120 is pushed into recess 118 and into engagement with the rubber membrane 116.

Engaging member 120 comprises two portions of different shape. A cylindrical portion 120a has edges that are disposed substantially parallel to the longitudinal axis X of the hammer housing 104. A conical portion 120b has sides that diverge away from axis X at angle α to form a partially conical shape.

Referring to Figure 2b, when the conical portion is pushed past the entrance 118a of recess of 118 the force transmitted to the reciprocating hammer 102 remains generally ambient. Accordingly, as the conical portion 120b of engaging member 120 is pushed through distance S₁ an increase in the force applied by the user to the handles 108 results in no increase in the force transmitted to the reciprocating hammer housing 104, resulting in the flat portion of the graph of Figure 2b from F₁ to F₂, i.e. F₁ = F₂. When the cylindrical portion 120a of the engaging member 120 then moves through distance S₂ past the entrance 118a to recess 118, the force transmitted to the hammer housing 104 increases generally linearly from F₂ to F₃. This is consistent with the characteristic shown in Figure 1b for a handle assembly having an engaging portion with parallel sides such as engaging member 20.

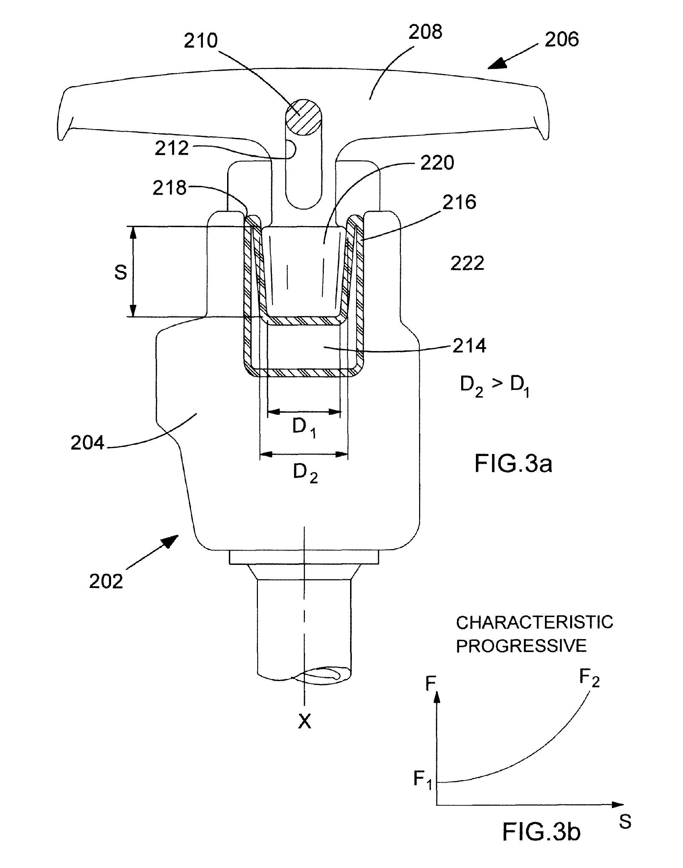

A third embodiment of a handle assembly for a reciprocating hammer is shown in Figure 3a, with parts common to the embodiment of Figure 1 shown with like reference numerals but increased by 200.

The handle assembly 206 comprises handles 208 connected to an engaging member 220. The handle assembly 206 is slidably disposed on the hammer housing 204 by engagement of guide rod of 210 with elongate aperture 212. In this embodiment, engaging member 220 is partially conical in shape and has sides 222 disposed at an angle to axis X that converge on axis X from the uppermost part of engaging member 220 to the lowermost part. The diameter of the engaging member 220 at its uppermost point is D₂, and its diameter at its lowermost point is D₁.

This results in a non-linear characteristic of force transmitted to the reciprocating hammer by a user against the distance of insertion of engaging member 220 into recess 218 as shown in Figure 2b. When engaging member 220 is located outside of recess 218 the force transmitted to housing 204 is F₁. As the user pushes down on handles 208, the engaging member 220 is pushed into recess 218 compressing air chamber 214, and the force transmitted to the housing increases generally exponentially to a maximum force of F₂ when engaging member 220 is fully located in recess 218 and fully compresses air chamber 214.

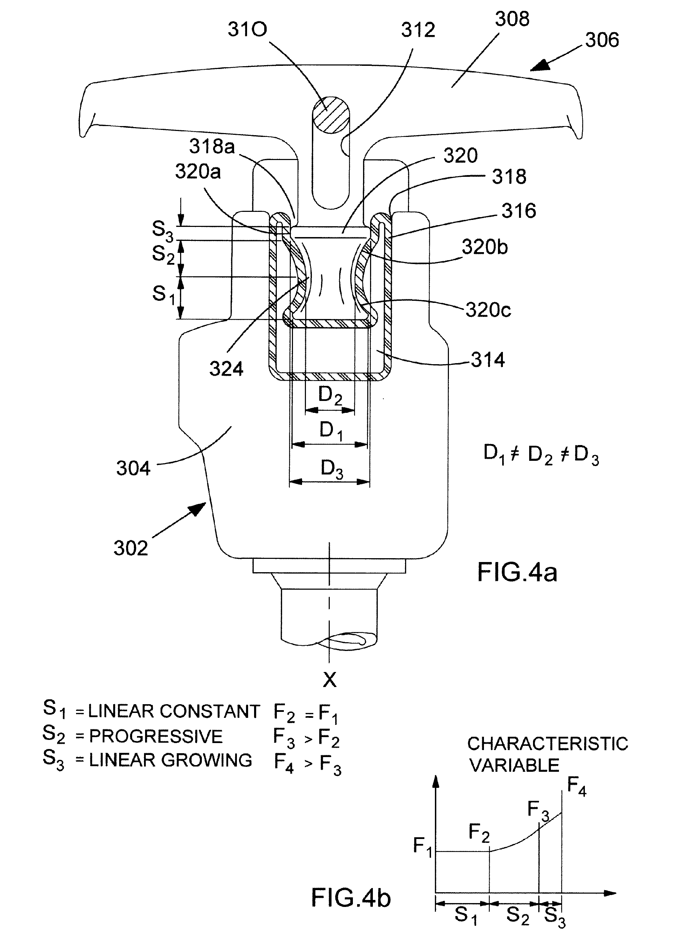

A fourth embodiment of a handle assembly for a reciprocating hammer is shown in Figure 4a, with parts common to the embodiment of Figure 1 shown with like reference numerals but increased by 300.

In this embodiment engaging member 320 comprises a circumferential groove 324. This means that the engaging member 320 has a cylindrical portion 320a with sides that are disposed parallel to axis X, a converging portion 320b with sides that converge towards axis X, and a diverging portion 320c with sides that diverge away from axis X. This gives rise to the characteristic of transmitted force against distance of insertion of engaging member 320 shown in Figure 4b.

A first region S₁ on the graph represents a user pushing handles 308 to move diverging portion 320c of engaging member 320 past opening 318a of recess 318 to compress air cushion 314. Here, the curve of force against distance is flat and F₁ = F₂. This is consistent with the behaviour of an engaging member having diverging sides such as that shown in Figure 2a.

As the user continues to push down on handles 308, the converging portion 320b moves past opening 318a and further compresses air chamber 314. From S₂ to S₃ the characteristic of force transmitted increases generally non-linearly from F₂ to F₃. This is consistent with the embodiment of Figure 3a.

Finally, when the cylindrical portion 320a moves into recess 318 the force increases generally linearly from F₃ until the air chamber 314 is at its maximum compression and the force transmitted to the hammer housing 304 is F₄. This is consistent with the embodiment of Figure 1a.

It can therefore be seen that the embodiment of Figure 4a is a combination of the first, second and third embodiments, and that the characteristic of force transmitted to the housing by the user versus distance of insertion of the engaging member of the handle assembly increases in accordance with the profiles of the engaging members of each of these embodiments.

It will be appreciated by persons skilled in the art that the above embodiments have been described by way of example only and not in any limitative sense, and that various alterations and modifications are possible without departure from the scope of the invention as defined by the appended claims. For example, the handle assembly may be provided with more than one engaging member.

## Claims

1. A handle assembly for a hammer apparatus having a housing, a motor and an output shaft for actuating a working member of the hammer apparatus, the handle assembly comprising:-
a handle for gripping by a user; and
damping means connected to the handle for damping transmission of vibrations from the working member to the handle, wherein the damping means comprises at least one fluid filled cushion.

2. An assembly according to claim 1, wherein at least one said fluid filled cushion is at least partially disposed in a respective recess in the hammer housing in use, and the handle assembly further comprises at least one engaging member disposed at the end of said assembly remote from the handle and adapted to be at least partially received in a respective said recess to engage at least one said fluid filled cushion, wherein at least one said engaging member is moveable relative to the corresponding said recess.

3. An assembly according to claim 2, wherein at least one said engaging member comprises sides disposed substantially parallel to a longitudinal axis of said hammer apparatus in use.

4. An assembly according to claim 2 or 3, wherein at least one said engaging member comprises sides diverging from said longitudinal axis in a direction towards an end of the handle assembly remote from the handle.

5. An assembly according to any one of claims 2 to 4, wherein at least one said engaging member comprises sides converging towards said longitudinal axis in a direction towards an end of the handle assembly remote from the handle.

6. An assembly according to any one of claims 2 to 5, wherein at least one said engaging member comprises a groove formed in a respective outer surface thereof.

7. An assembly according to any one of the preceding claims, further comprising at least one protrusion and/or elongate aperture adapted to slidably receive a respective elongate aperture and/or protrusion to retain the handle assembly in contact with said cushion.

8. An assembly according to any one of the preceding claims, wherein at least one said cushion is formed from at least one elastomeric material.

9. An assembly according to claim 8, wherein at least one said elastomeric material is rubber.

10. A handle assembly for a hammer apparatus having a housing, a motor, and an output shaft for actuating a working member of the hammer apparatus, the handle assembly substantially as hereinbefore described with reference to the accompanying drawings.

11. A hammer apparatus including a handle assembly according to any one of the preceding claims.
